# FASCICULE DE BREVET EUROPEEN

(11) **EP 3 585 656 B1**
(45) Date de publication et mention de la délivrance du brevet: **31.03.2021**
(21) Numéro de dépôt: 18709674.8
(22) Date de dépôt: 20.02.2018
(51) Int. Cl.: B60R 19/38, B62D 25/16, B60R 19/24

(54) **DISPOSITIF DE FIXATION D'UN PARE-CHOCS SUR UNE POUTRE DE PARE-CHOCS DE VEHICULE AUTOMOBILE**
VORRICHTUNG ZUR BEFESTIGUNG EINES STOSSFÄNGERS AN EINEM STOSSFÄNGERTRÄGER EINES KRAFTFAHRZEUG
DEVICE FOR ATTACHING A BUMPER TO A MOTOR VEHICLE BUMPER BEAM

(30) Priorité: 24.02.2017 FR 1751472
(43) Date de publication de la demande: 01.01.2020
(73) Titulaire: PSA Automobiles SA, 78300 Poissy (FR)
(72) Inventeur: LAIR, Renaud, 75015 Paris (FR)
(86) Numéro de dépôt international: PCT/FR2018/050393
(87) Numéro de publication internationale: WO 2018/154223

(56) Documents cités:
- EP-A1- 0 110 631
- DE-A1-102004 032 802
- JP-A- S5 918 048

## Description

La présente invention se rapporte à un dispositif de fixation d'un pare-chocs sur une poutre de pare-chocs d'un véhicule automobile, ainsi qu'à un système d'absorption de choc comprenant une poutre et un pare-chocs.

Le document DE 10 2004 032802 divulgue un dispositif de fixation d'un pare-chocs sur une poutre de pare-chocs de véhicule automobile, constitué de trois platines s'étendant perpendiculairement l'une à l'autre. Les deux platines forment une équerre, et la troisième platine est reliée à cette équerre.

Un tel dispositif de fixation est classiquement constitué d'une équerre de fixation de pare-chocs fixée sur la poutre de pare-chocs avant. Les équerres de fixation de pare-chocs sur poutre permettent de relier des points d'appui du pare-chocs et des projecteurs avant sur la poutre de structure.

Ces équerres sont généralement montées et réglées en usine pour assurer les jeux et affleurements des éléments de la face avant.

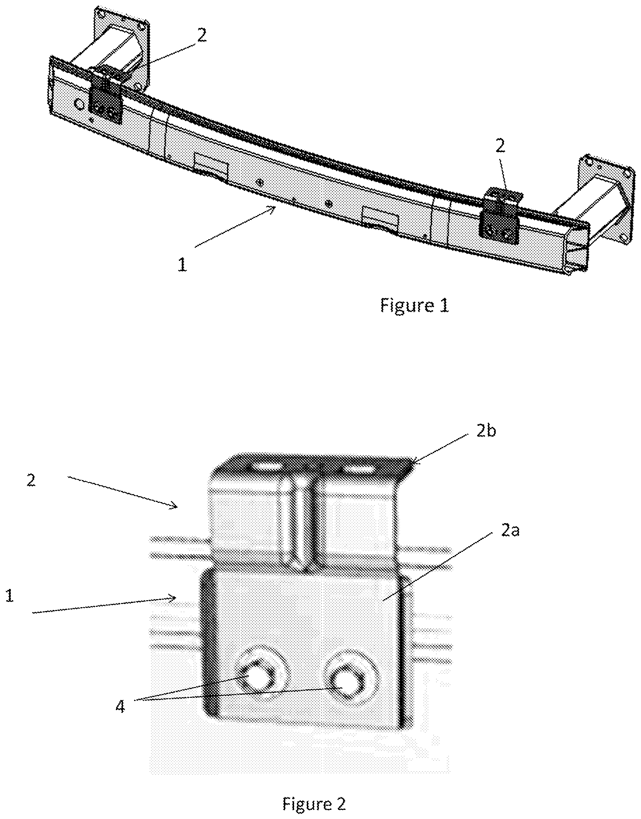

Il peut y en avoir deux ou trois sur la même poutre, par exemple deux latérales et parfois une centrale. Un tel agencement est visible sur les figures 1 et 2 où l'on peut voir une poutre avant 1 destinée à supporter un pare-chocs et qui est équipée de deux équerres 2 pour le pare-chocs, situées sensiblement à proximité des extrémités latérales de la poutre 1.

Une équerre 2 comprend une première platine 2a destinée à s'étendre contre la face avant de la poutre 1. A l'extrémité de la platine 2a se trouvant en saillie au-dessus de la poutre 1, s'étend dans un plan perpendiculaire à la première platine 2a, une seconde platine 2b.

La platine 2a présente deux trous oblongs permettant un prémontage au moyen de deux vis 4. Les vis 4 sont reçues à travers des trous oblongs de l'équerre 2 qui autorisent un déplacement axial en Y de l'équerre 2 par rapport à la poutre 1 lorsque les vis 4 sont partiellement vissées, la fixation définitive s'effectuant par vissage complet.

Ces équerres 2 présentent respectivement deux points de fixation sur la poutre. Par ailleurs, le montage est relativement complexe et demande une réalisation précise des orifices de fixation tant sur l'équerre que sur la poutre.

La présente invention a donc pour but de proposer un dispositif de fixation permettant de fixer le pare-chocs sur la poutre avant et ce, de manière simplifiée tout en étant économiquement plus avantageuse.

A cet effet, l'invention a pour objet un dispositif de fixation d'un pare-chocs sur une poutre de pare-chocs de véhicule automobile, constitué de deux platines s'étendant perpendiculairement l'une à l'autre en forme d'équerre, la première platine servant à la fixation sur la poutre et la seconde platine à la fixation du pare-chocs, caractérisé en ce que la première platine comporte un trou unique de fixation et au moins un moyen de butée ménagé en saillie sur ladite première platine du côté où s'étend la seconde platine, ledit moyen de butée se trouvant entre le trou de fixation unique et la seconde platine.

Ainsi, de manière avantageuse, lorsqu'on monte un dispositif de fixation ou équerre selon l'invention sur une poutre, on applique la première platine contre la face avant de la poutre et le moyen de butée en saillie se trouvant entre le trou de fixation et la seconde platine, peut ainsi se trouver positionné au-dessus de la poutre. Comme l'équerre n'est fixée que par un point sur la poutre, le moyen de butée en venant en butée contre la poutre empêche toute rotation de l'équerre autour de cet unique point de fixation.

De manière très avantageuse, le dispositif de fixation selon l'invention peut donc être pré-monté sur une poutre sans qu'il soit nécessaire de fixer totalement ledit dispositif. Il est alors possible de procéder à des réglages en Z dudit dispositif, voire en Y, lors du montage du pare-chocs permettant d'assurer les jeux et affleurements optimaux de la face avant sans risque de voir pivoter l'équerre.

Selon une forme de réalisation préférée, un moyen de butée est constitué d'une languette s'étendant en saillie de ladite première platine du même côté que la seconde platine.

De préférence, le dispositif de fixation selon l'invention comprend deux languettes anti-rotation. De manière encore plus préférée, ces languettes sont ménagées de part et d'autre d'un axe longitudinal de la première platine passant par le trou unique de fixation. On peut prévoir que les languettes soient ménagées de manière symétrique par rapport audit axe longitudinal.

On garantit avec cette forme de réalisation une anti-rotation de l'équerre optimale.

De préférence, la première platine est découpée pour former une languette qui est ensuite pliée pour s'étendre en saillie depuis la face de la première platine du même côté où s'étend la seconde platine. De manière encore plus préférée, une languette s'étend perpendiculairement à la première platine et de préférence parallèlement à la seconde. On peut également envisager de rapporter la languette sur la platine par un moyen d'assemblage approprié tel que par soudage.

En variante, les moyens de butée peuvent être constitués par des bossages ménagés dans la platine. De tels bossages peuvent être réalisés par déformation de la platine par emboutissage.

Un dispositif de fixation selon l'invention permet donc avantageusement d'avoir une seule fixation à la poutre pour chaque équerre au lieu des deux précédemment, ce qui permet un gain économique tant du point de vue matériel avec le gain d'une vis/écrou sur la poutre et que du point de vue du temps de montage.

Le dispositif selon l'invention permet également de conserver le réglage du positionnement de l'équerre en Z et/ou en Y et de maintenir l'équerre en position lorsque la vis n'est pas serrée.

L'invention concerne également un dispositif d'absorption de choc pour un véhicule automobile, comprenant notamment une poutre de pare-chocs et un pare-chocs, le pare-chocs étant fixé sur la poutre à l'aide d'un ou plusieurs dispositifs de fixation selon l'invention.

L'invention concerne également un véhicule équipé d'une tel dispositif d'absorption de chocs.

On décrira maintenant l'invention plus en détails en référence au dessin dans lequel :
La figure 1 représente une vue perspective avant d'une poutre de véhicule pourvues d'équerres de fixation selon l'état de la technique ;
La figure 2 représente une vue agrandie d'une équerre selon la figure 1 ;
La figure 3 représente une vue en perspective d'un dispositif de fixation selon une forme de réalisation de l'invention ;
La figure 4 représente une vue en perspective de la face opposée du dispositif de fixation selon la figure 3
La figure 5 représente une vue en perspective avant d'un système d'absorption de choc comprenant deux dispositifs de fixation selon l'invention
La figure 6 représente une vue agrandie d'un dispositif de fixation de la figure 5 ;
La figure 7 représente une vue en coupe d'un dispositif de fixation selon l'invention monté sur une poutre de véhicule et
La figure 8 représente une vue en perspective d'une deuxième forme de réalisation de l'invention.

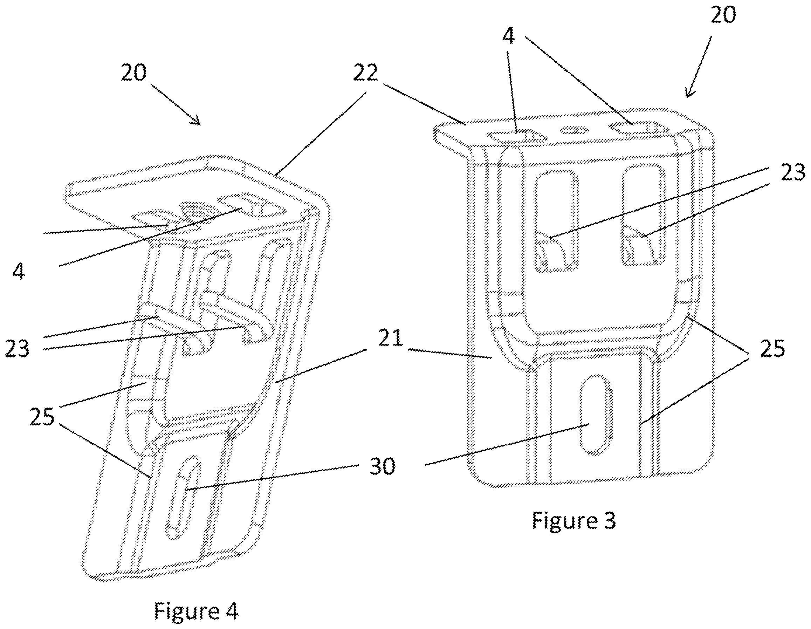

Une première forme de réalisation du dispositif de fixation selon l'invention est représentée à la figure 3. Ce dispositif est constitué d'une première platine 21 et d'une seconde platine 22 s'étendant perpendiculairement à une extrémité de la première platine 21 pour former une équerre 20.

La platine 21 présente à son extrémité opposée à la platine 22 un orifice 30 unique de réception d'un moyen de fixation sur la poutre 1 d'un véhicule. La platine 22 présente au moins un orifice de réception d'un moyen de fixation pour le pare-chocs, dans l'exemple représenté deux orifices de réception 4.

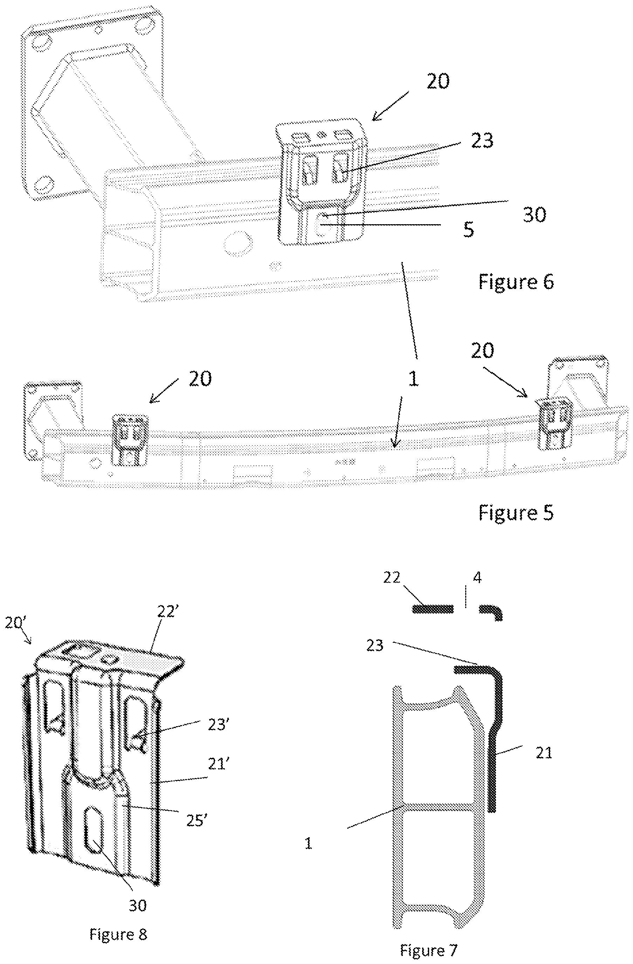

La platine 21 présente du côté de son extrémité pourvue de la platine 22, deux languettes 23 découpées et pliées de manière à s'étendre en saillie sur la face de la platine 21 du même côté que la platine 22. Chaque languette 23 s'étend de préférence parallèlement à la seconde platine 22, cf. la figure 7.

Ces languettes 23 constituent des languettes anti-rotation permettant de positionner le dispositif de fixation 20 sur la partie supérieure de la poutre 1 sans que ledit dispositif ne puisse pivoter autour de cet unique point de fixation. En effet, fixer l'équerre 20 avec un unique point de rotation engendre un risque de rotation de l'équerre 20, la présence des languettes anti-rotation 23 élimine ce risque.

L'équerre 20 au niveau de la platine 21 présente un trou 30 oblong (selon le sens longitudinal de la platine 21) que l'on doit positionner en regard d'un orifice de la poutre 1. On peut alors positionner l'équerre 20 facilement par un moyen de fixation de type vis/écrou 5 sans risque de voir pivoter l'équerre 20 autour de cet axe de fixation. On garantit ainsi un maintien sans rotation de l'équerre.

Une fois, le moyen de fixation dans le trou oblong de l'équerre 20 en regard de la poutre, il est possible de réaliser un réglage du dispositif de fixation selon la direction Z du véhicule comportant la poutre 1 grâce au trou oblong 30. Celui-ci peut également présenter une largeur appropriée pour autoriser également un réglage en Y. On peut alors fixer l'équerre 20 de manière correcte pour porter le pare-chocs et respecter les jeux et affleurements de pièces entre elles.

Comme on peut le voir aux figures 3 et 2, la platine 21 qui est en aluminium est emboutie de manière à présenter des nervures de rigidification 25.

A la figure 8 est représentée une deuxième forme de réalisation d'une équerre 20' selon l'invention réalisée en acier. Cette équerre 20' comprend également une platine 21' et une platine 22' s'étendant perpendiculairement l'une à l'autre. Dans la platine 21' est ménagé un trou oblong unique 30' et des languettes 23' anti-rotation sont également formées. Des nervures de rigidification 25' sont ménagées également pour rigidifier l'équerre 20'.

On peut également prévoir de réaliser un bossage dans la platine pour former le moyen de butée tout comme il est envisageable de rapporter ledit moyen de butée sur la platine pour tout moyen d'assemblage approprié.

## Revendications

1. Dispositif de fixation (20) d'un pare-chocs sur une poutre (1) de pare-chocs de véhicule automobile, constitué de deux platines (21, 22) s'étendant perpendiculairement l'une à l'autre en forme d'équerre, la première platine (21) servant à la fixation sur la poutre (1) et la seconde platine (22) à la fixation du pare-chocs, **caractérisé en ce que** la première platine (21) comporte un trou unique de fixation (30) et au moins un moyen de butée (23) ménagé en saillie de ladite première platine (21) du même côté que la seconde platine (22), ledit moyen de butée (23) se trouvant entre le trou de fixation unique (30) et la seconde platine (22).

2. Dispositif de fixation selon la revendication 1, **caractérisé en ce qu'**un moyen de butée est constitué d'une languette (23).

3. Dispositif de fixation selon la revendication 2, **caractérisé en ce qu'**une languette s'étend perpendiculairement à la première platine (21).

4. Dispositif de fixation selon l'une des revendications 2 et 3, **caractérisé en ce qu'**il comprend deux languettes (23).

5. Dispositif de fixation selon la revendication 4, **caractérisé en ce que** ces languettes (23) sont ménagées de part et d'autre d'un axe longitudinal de la première platine (21) passant par le trou unique de fixation (30).

6. Dispositif selon l'une des revendications 2 à 5, **caractérisé en ce qu'**une languette (23) est constituée par une découpe de la première platine (21) pour former une languette qui est ensuite pliée pour s'étendre en saillie depuis la face de la première platine (21) du même côté où s'étend la seconde platine (22).

7. Dispositif de fixation selon la revendication 1, **caractérisé en ce qu'**un moyen de butée est constitué d'un bossage.

8. Dispositif de fixation selon l'une des revendications 1 à 7, **caractérisé en ce que** le trou de fixation unique est un trou oblong (30) selon l'axe longitudinal de la platine (21).

9. Dispositif d'absorption de choc pour un véhicule automobile, comprenant notamment une poutre de pare-chocs et un pare-chocs, **caractérisé en ce que** le pare-chocs est fixé sur la poutre à l'aide d'un ou plusieurs dispositifs de fixation selon l'une des revendications 1 à 8.

10. Véhicule automobile comprenant un dispositif d'absorption de chocs selon la revendication 9.

## Patentansprüche

1. Vorrichtung zur Befestigung (20) eines Stoßfängers an einem Stoßfängerträger (1) eines Kraftfahrzeugs, bestehend aus zwei senkrecht zueinander verlaufenden winkelförmigen Platinen (21, 22), wobei die erste Platine (21) zur Befestigung am Träger (1) und die zweite Platine (22) zur Befestigung des Stoßfängers dient, **dadurch gekennzeichnet, dass** die erste Platine (21) ein einziges Befestigungsloch (30) und mindestens ein Anschlagmittel (23) aufweist, das von der ersten Platine (21) auf derselben Seite wie die zweite Platine (22) vorsteht, wobei sich das Anschlagmittel (23) zwischen dem einzigen Befestigungsloch (30) und der zweiten Platine (22) befindet.

2. Befestigungsvorrichtung nach Anspruch 1, **dadurch gekennzeichnet, dass** ein Anschlagmittel aus einer Zunge (23) besteht.

3. Befestigungsvorrichtung nach Anspruch 2, **dadurch gekennzeichnet, dass** sich eine Zunge senkrecht zur ersten Platine (21) erstreckt.

4. Befestigungsvorrichtung nach einem der Ansprüche 2 und 3, **dadurch gekennzeichnet, dass** sie zwei Zungen (23) umfasst.

5. Befestigungsvorrichtung nach Anspruch 4, **dadurch gekennzeichnet, dass** diese Zungen (23) beidseits einer Längsachse der ersten Platine (21), die durch das einzige Befestigungsloch (30) verläuft, ausgebildet sind.

6. Vorrichtung nach einem der Ansprüche 2 bis 5, **dadurch gekennzeichnet, dass** eine Lasche (23) aus einem Ausschnitt der ersten Platine (21) besteht, um eine Lasche zu bilden, die dann gefaltet wird, um sich von der Seite der ersten Platine (21) auf der gleichen Seite, auf der sich die zweite Platine (22) erstreckt, zu erstrecken.

7. Befestigungsvorrichtung nach Anspruch 1, **dadurch gekennzeichnet, dass** ein Anschlagmittel aus einem Vorsprung besteht.

8. Befestigungsvorrichtung nach einem der Ansprüche 1 bis 7, **dadurch gekennzeichnet, dass** das einzelne Befestigungsloch ein Langloch (30) entlang der Längsachse der Platine (21) ist.

9. Stoßdämpfungsvorrichtung für ein Kraftfahrzeug, insbesondere mit einem Stoßfängerträger und einem Stoßfänger, **dadurch gekennzeichnet, dass** der Stoßfänger mittels einer oder mehrerer Befestigungseinrichtungen nach einem der Ansprüche 1 bis 8 am Träger befestigt ist.

10. Kraftfahrzeug mit einer Stoßdämpfungsvorrichtung nach Anspruch 9.

## Claims

1. Fixing device (20) of a bumper on a beam (1) of a motor vehicle bumper, consisting of two decks (21, 22) extending perpendicular to each other in the shape of a bracket, the first plate (21) used for fastening on the beam (1) and the second plate (22) used for fastening the bumper, **characterized in that** the first platinum (21) has a single attachment hole (30) and at least one means of stop (23) placed in the protruding position of the first platinum (21) on the same side as the second platinum (22), the said means of stop (23) between the single attachment hole (30) and the second platinum (22).

2. A fixation device according to Claim 1, characterized as a means of stop consists of a tab (23).

3. Fixing device according to Claim 2, characterized as a tab extending perpendicular to the first plate (21).

4. Fixing device according to one of claims 2 and 3, characterized as it includes two tabs (23).

5. Fixing device according to Claim 4, characterized as these tabs (23) are arranged on either side of a longitudinal axis of the first plate (21) through the single fixing hole (30).

6. A device according to one of the claims 2 to 5, **characterized by** a tongue (23) consisting of a cutting of the first platinum (21) to form a tongue which is then folded to protrude from the face of the first platinum (21) on the same side where the second platinum extends (22).

7. A fixation device according to Claim 1, characterized as a means of stop consists of a bossage.

8. Fixing device according to one of the claims 1 to 7, characterized as the single fixing hole is an oblong hole (30) according to the longitudinal axis of the plate (21).

9. A shock absorption device for a motor vehicle, including a bumper beam and a bumper, **characterized by** the bumper attached to the beam using one or more fastening devices according to one of the claims 1 to 8.

10. Motor vehicle with shock absorption device according to claim 9.
